# EUROPEAN PATENT APPLICATION

(11) **EP 2 704 145 A2**
(43) Date of publication of application: **05.03.2014**
(21) Application number: 13180915.4
(22) Date of filing: 19.08.2013
(51) Int. Cl.: G11B 7/24038, G11B 7/2405

(54) **Optical storage medium, information recording apparatus, and information recording method**

(30) Priority: 31.08.2012 JP 2012192526
(71) Applicant: Kabushiki Kaisha Toshiba, Tokyo 105-8001 (JP)
(72) Inventor: Watabe, Kazuo, Tokyo, 105-8001 (JP); Okano, Hideaki, Tokyo, 105-8001 (JP); Ogawa, Akihito, Tokyo, 105-8001 (JP)
(74) Representative: Henkel, Breuer & Partner

(57) **Abstract**

According to one embodiment, an optical storage medium includes a guide layer (20), a recording layer group (21), and a guide layer-side intermediate layer (30). The recording layer group (21) comprises a plurality of recording layers and a plurality of intermediate layers arranged between the plurality of recording layers. The guide layer-side intermediate layer (30) is arranged between the guide layer and a first recording layer closest to the guide layer out of the plurality of recording layers. A thickness T1 of the guide layer-side intermediate layer does not match a sum S1 of thicknesses of arbitrary continuous intermediate layers comprised in the recording layer group.

## Description

Embodiments described herein relate generally to an optical storage medium, an information recording apparatus, and an information recording method.

Interlayer crosstalk is known to occur upon reproducing information of a multilayered optical disc including a plurality of recording layers. There has been proposed, for example, a technique of reducing crosstalk of a light beam (normally blue light) used to reproduce information of the recording layer.

There is known a multilayered optical disc including a (dedicated) servo layer aside from a recording layer. A demand has arisen to reduce crosstalk of dedicated servo light (normally red light) used to reproduce information of the servo layer.

A servo signal is the basis of information recording/reproduction and needs to be highly reliable not only in information recording but also in information reproduction, like an information reproduction signal. The related art does not mention interlayer crosstalk that occurs in the optical path of dedicated servo light. It is difficult to reduce interlayer crosstalk that occurs in the optical path of dedicated servo light. It may therefore be impossible to exploit the sufficient performance of the multilayered optical disc.

A general architecture that implements the various features of the embodiments will now be described with reference to the drawings. The drawings and the associated descriptions are provided to illustrate the embodiments and not to limit the scope of the invention.
FIG. 1 is a view showing an example of an optical storage medium according to the embodiment;
FIG. 2 is a block diagram showing an example of the arrangement of an information recording/reproduction apparatus according to the embodiment;
FIG. 3 is a view showing an example of the arrangement of an optical pickup according to the embodiment;
FIG. 4 is a view showing an example of recording/reproduction according to the embodiment;
FIG. 5 is a view showing an example of occurrence of confocal crosstalk light of a blue-violet laser beam;
FIG. 6 is a view showing an example of occurrence of confocal crosstalk light of a red laser beam;
FIG. 7 is a view showing another example of occurrence of confocal crosstalk light of a red laser beam;
FIG. 8 is a view showing an example in which no confocal crosstalk light occurs;
FIG. 9 is a view for explaining an example of the first condition of guide light confocal crosstalk occurrence;
FIG. 10 is a view for explaining an example of the second condition of guide light confocal crosstalk occurrence;
FIG. 11A is a view for explaining the first example of the disc structure of a multilayered optical storage medium according to the embodiment (first intermediate layer < second intermediate layer);
FIG. 11B is a view for explaining the second example of the disc structure of the multilayered optical storage medium according to the embodiment (first intermediate layer < second intermediate layer);
FIG. 11C is a view for explaining the third example of the disc structure of a multilayered optical storage medium according to the embodiment (first intermediate layer < second intermediate layer);
FIG. 12A is a view for explaining the first example of the disc structure of a multilayered optical storage medium according to the embodiment (first intermediate layer > second intermediate layer);
FIG. 12B is a view for explaining the second example of the disc structure of the multilayered optical storage medium according to the embodiment (first intermediate layer > second intermediate layer);
FIG. 12C is a view for explaining the third example of the disc structure of a multilayered optical storage medium according to the embodiment (first intermediate layer > second intermediate layer);
FIG. 13 is a view showing an example of the probability of confocal crosstalk occurrence (first intermediate layer < second intermediate layer); and
FIG. 14 is a view showing an example of the probability of confocal crosstalk occurrence (first intermediate layer > second intermediate layer).

Various embodiments will be described hereinafter with reference to the accompanying drawings.

In general, according to one embodiment, an optical storage medium includes a guide layer, a recording layer group, and a guide layer-side intermediate layer. The recording layer group comprises a plurality of recording layers and a plurality of intermediate layers arranged between the plurality of recording layers. The guide layer-side intermediate layer is arranged between the guide layer and a first recording layer closest to the guide layer out of the plurality of recording layers. A thickness T1 of the guide layer-side intermediate layer does not match a sum S1 of thicknesses of arbitrary continuous intermediate layers comprised in the recording layer group.

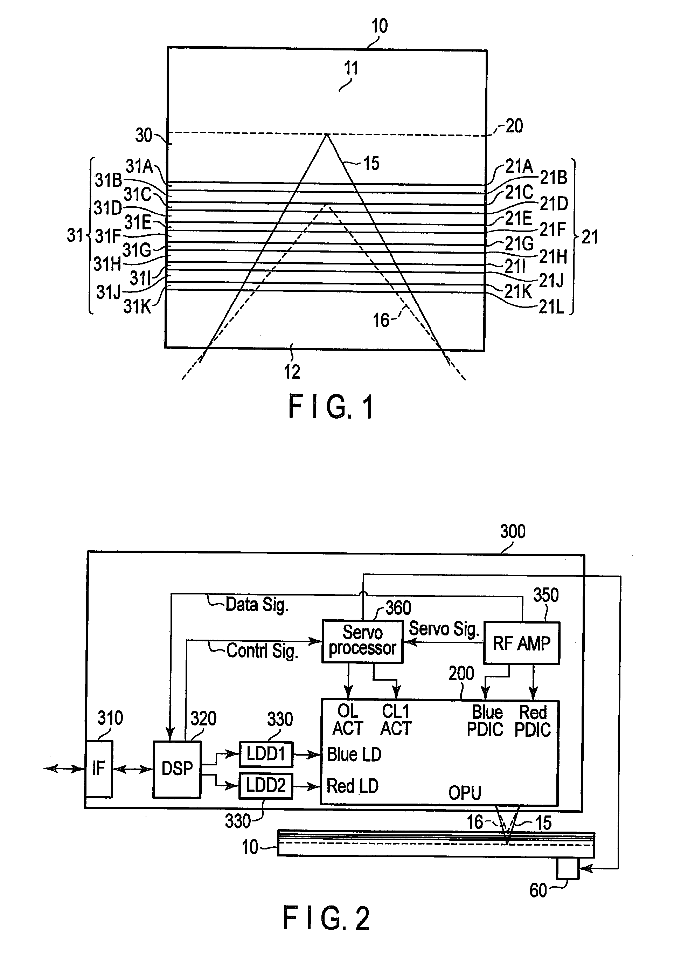

FIG. 1 is a view showing the sectional structure of an optical storage medium according to the embodiment. In the embodiment, the optical storage medium is an optical disc 10 including a plurality of recording/reproduction layers. Information is recorded on a recording film in the optical disc 10 by a laser beam emitted by an optical pickup (OPU) to be described later. The optical storage medium has a circular planar shape having a diameter of, for example, 120 mm. The effect of the optical storage medium according to this embodiment does not depend on the planar shape. The optical storage medium may have, for example, an elliptic shape, a polygonal shape, or a composite shape thereof.

The optical disc 10 has a structure in which a guide layer 20 having a guide groove or pit string for servo signal generation at the time of recording/reproduction and a recording layer 21 (including recording layers 21A to 21L) are formed on a substrate 11. The recording layer 21 is also referred to as a recording layer group. The recording layer group includes the 12 recording layers 21A to 21L and 11 intermediate layers 31A to 31K. The recording layers 21A to 21L and the intermediate layers 31A to 31K are alternately arranged. The guide layer 20 and the recording layer 21 are formed in this order from the side of the substrate 11. Laser beams 15 and 16 from the optical pickup, which are used for recording/reproduction, enter from the side opposite to the substrate 11. A cover layer 12 is formed on the side of the recording layer 21 opposite to the substrate 11.

The guide groove or pit string on the guide layer 20 has a spiral structure with, for example, a depth of 60 nm and a track pitch of 0.64 µm. The ratio of the concave portion to the convex portion of the section is approximately 1 : 1. Note that the groove depth (pit depth) and the track pitch are not limited to those. A deep groove (deep pit) having a depth of about 100 nm or a shallow groove (shallow pit) having a depth of about 20 nm is also possible. A narrow track pitch of about 0.32 µm or a wide track pitch of about 0.74 or 1.2 µm is also possible. The track structure may be a concentric structure. Also usable is a so-called single spiral structure that is a spiral structure in which the concave portion and the convex portion switch every round. Address information is applied to the guide groove by, for example, wobble. Wobble means meandering in a direction perpendicular to the track running direction of the guide groove in the optical disc 10.

An intermediate layer 30 having translucency is formed between the guide layer 20 and the recording layer 21A closest to the guide layer 20. On the other hand, the intermediate layers 31A to 31K having translucency are also formed between adjacent two recording layers out of the recording layer 21. The thicknesses of the intermediate layer 30 and an intermediate layer 31 (including the intermediate layers 31A to 31K) will be described later.

The cover layer 12 is translucent and has a thickness of, for example, 53 µm. The material of the cover layer is not particularly limited as long as it has translucency. A synthetic resin such as polycarbonate or PMMA or glass can be used. The recording layer 21 is a layer to record information. The recording layer 21 is changed by a laser beam emitted by the optical pickup and records a mark corresponding to information. For example, a phase change recording film formed from a multilayered film containing a phase change material or a write once read many recording film containing an organic coloring material. The thickness of one recording layer 21 is, for example, 0.2 µm or less. The recording layer 21 is much thinner than the cover layer or the intermediate layer.

At the time of recording/reproduction of the optical disc 10, the guide layer 20 and the intermediate layer 31 are irradiated with the laser beams 15 and 16, respectively. The laser beams 15 and 16 have different wavelengths for the sake of easy optical path separation in the optical pickup. For example, the laser beam 15 is a red laser beam, and the laser beam 16 is a blue-violet laser beam.

FIG. 2 illustrates the arrangement of an information recording/reproduction apparatus 300 according to the first embodiment. The information recording/reproduction apparatus 300 includes an interface (IF) 310, a signal processing unit (DSP) 320, laser drivers (LDD1) 330 and (LDD2) 340, an optical pickup head unit (OPU) 200, an RF amplifier IC (RF AMP) 350, a servo controller 360, and a spindle motor 60. The multilayered optical disc 10 is set on the spindle motor 60.

The interface 310 is a connection portion that exchanges command and data with an external host (not shown) and complies with a specific standard (for example, SATA).

The signal processing unit 320 transmits/receives commands and data to/from the external host via the interface 310, converts data, transmits data pulses and control signals to the laser drivers, transmits control signals to the servo controller 360, and receives data signals from the RF amplifier IC 350.

The laser drivers 330 and 340 receive data pulses and control signals from the signal processing unit 320, convert data into driving pulses, and transmit the driving pulses to the optical pickup head unit 200.

The optical pickup head unit 200 irradiates the guide layer 20 and the recording layer 21 of the multilayered optical disc 10 with the laser beams 15 and 16, respectively, in accordance with the driving pulses from the laser drivers 330 and 340, receives the reflected light, and transmits a signal corresponding to the change in the intensity of the reflected light to the RF amplifier IC 350.

The RF amplifier IC 350 amplifies a signal from the optical pickup head unit 200, generates a servo signal and a data signal, and transmits them to the servo controller 360 and the signal processing unit 320, respectively.

The servo controller 360 receives the servo signal from the RF amplifier IC 350, converts the servo signal into an actuator driving signal and a spindle motor driving signal, transmits the actuator driving signal to the optical pickup head unit 200, and transmits the driving signal to the spindle motor 60.

The spindle motor 60 receives the spindle motor driving signal from the servo controller 360, and rotates the attached optical disc 10 about a shaft perpendicular to its running direction.

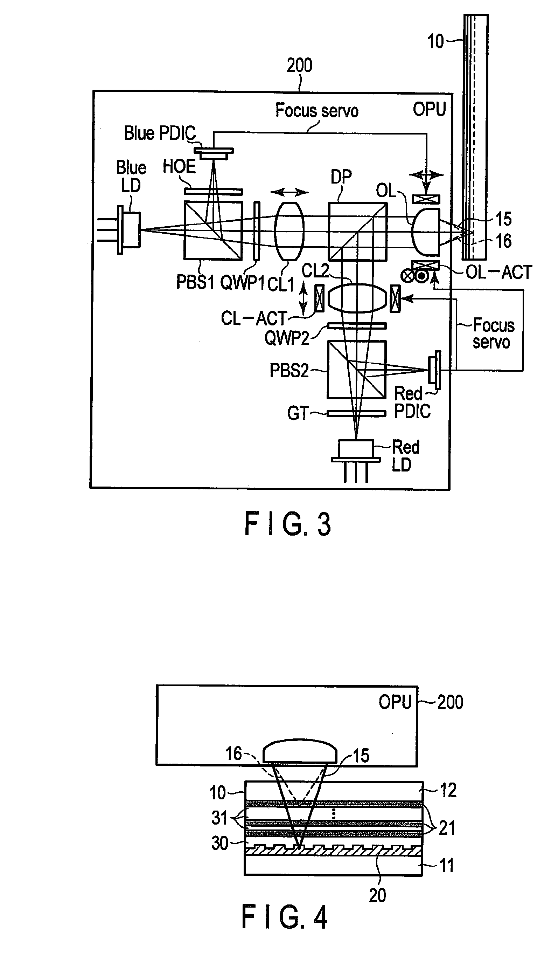

FIG. 3 shows an example of the detailed arrangement of the optical pickup head unit 200 of the information recording/reproduction apparatus 300 according to the embodiment. The optical pickup head unit (OPU) 200 includes a blue-violet laser (blue LD), a red laser (red LD), polarized beam splitters (PBS) 1 and 2, quarter wave plates (QWP) 1 and 2, collimator lenses (CL) 1 and 2, an objective lens, a hologram element (HOE), a blue-violet photodetector IC (blue PDIC), a red photodetector IC (red PDIC), a diffraction element (GT), a dichroic prism (DP), a collimator lens actuator (CL-ACT), and an objective lens actuator (OL-ACT).

The blue-violet laser is a semiconductor laser having a wavelength of, for example, 405 nm, and emits a laser beam for recording and reproduction. The blue-violet laser is connected to the laser driver 1 of the information recording/reproduction apparatus 300 shown in FIG. 2.

The PBS 1 passes incident light from the blue-violet laser, and reflects light emitted by the blue-violet laser and reflected by the optical disc 10 which has a plane of polarization rotated by 90° from that of the incident light.

The QWP 1 passes incident light from the blue-violet laser, and converts the linearly polarized light into circularly polarized light. The QWP 1 also passes light emitted by the blue-violet laser and reflected by the optical disc 10, and converts the circularly polarized light into linearly polarized light. At this time, the plane of polarization of the linearly polarized light is changed by 90° from that of the incident light. For example, if the incident light is p-polarized light, the reflected light is s-polarized light.

The collimator lens 1 converts incident light from the blue-violet laser into almost collimated light.

The objective lens condenses the light emitted by the blue-violet laser onto the recording layer 21 of the optical disc 10. Note that the objective lens has a selective aperture on the laser source side so as to have a numerical aperture that changes between the red laser beam 15 and the blue-violet laser beam 16. For example, the numerical aperture is 0.85 for the blue-violet laser beam 16 and 0.65 for the red laser beam 15.

The dichroic prism transmits incident light from the blue-violet laser and reflects incident light from the red laser.

The red laser is a semiconductor laser having a wavelength of, for example, 655 nm, and emits a laser beam for tracking servo. The red laser is connected to the laser driver 2 of the information recording/reproduction apparatus 300.

The diffraction element splits a red laser beam into three beams by diffraction. The three beams become one main beam and two sub-beams on the optical disc 10.

The PBS 2 passes incident light from the red laser, and reflects light emitted by the red laser and reflected by the optical disc 10 which has a plane of polarization rotated by 90° from that of the incident light.

The QWP 2 passes incident light from the red laser, and converts the linearly polarized light into circularly polarized light. The QWP 2 also passes light emitted by the red laser and reflected by the optical disc 10, and converts the circularly polarized light into linearly polarized light. At this time, the plane of polarization of the linearly polarized light is changed by 90° from that of the incident light. For example, if the incident light is p-polarized light, the reflected light is s-polarized light.

The collimator lens 2 converts light emitted by the red laser into almost collimated light.

The HOE passes a light beam emitted by the blue-violet laser and reflected by the information recording layer of the optical disc 10, and diffracts a predetermined region of the light beam at a predetermined angle.

The blue-violet photodetector IC receives the blue-violet laser beam from the HOE, generates a current corresponding to the received light amount, causes an internal current-voltage conversion circuit to convert the current into a voltage, and outputs the voltage.

The red photodetector IC receives the red laser beam reflected by the PBS 2, generates a current corresponding to the received light amount, causes an internal current-voltage conversion circuit to convert the current into a voltage, and outputs the voltage.

The collimator lens actuator drives the collimator lens 2 vertically in the drawing surface so that the red laser beam that has exited from the objective lens moves in the optical axis direction (focus direction) on the optical disc 10.

The objective lens actuator drives the objective lens horizontally in the drawing surface so that the laser beam that has exited from the objective lens moves in the optical axis direction (focus direction) on the optical disc 10. The objective lens actuator also drives the objective lens in a direction perpendicular to the drawing surface so that the laser beam that has exited from the objective lens moves in the vertical direction (radial direction) of the recording track on the optical disc 10.

The operation of the information recording/reproduction apparatus according to the embodiment at the time of information recording will be described next with reference to FIGS. 2 and 4.

A host (not shown) sends a user data recording command and recording target data to the signal processing unit 320 via the interface 310. The signal processing unit 320 starts a data recording process in accordance with the received recording command. First, the signal processing unit 320 transmits driving signals to the laser drivers 1 and 2 so as to turn on the blue-violet laser and the red laser at the reproduction power. The servo controller 360 transmits a rotation driving signal to the spindle motor 60 to rotate the optical disc 10 at a predetermined rotational speed. The signal processing unit 320 transmits a focus search control signal to the servo controller 360. The servo controller 360 simple-harmonic-oscillates the collimator lens actuator in the focus direction in accordance with the transmitted control signal. The focus of the red laser beam 15 that has passed through the simple-harmonic-oscillated collimator lens and exited from the objective lens repetitively reciprocally moves in the vertical direction across the guide layer 20 of the optical disc 10. The reflected light of the red laser beam 15 from the guide layer 20 is condensed on the red photodetector IC. The red photodetector IC converts a current based on the reflected light amount into a voltage and sends it to the RF amplifier IC 350. The RF amplifier IC 350 generates a focus error signal of the red laser beam from the received voltage signal by predetermined calculation and sends the signal to the servo controller 360. The focus error signal is generated by, for example, an astigmatism generation optical element (not shown) using a known astigmatism method. In a region where the focus error signal becomes almost zero, the servo controller 360 switches the driving of the collimator lens actuator from the simple harmonic oscillation to driving based on the focus error signal and pulls the focus of the red laser beam in the guide groove layer. The servo controller 360 subsequently pulls the focus of the blue-violet laser beam 16 in the target recording layer 21 on the optical disc 10. At this time, the focus of the blue-violet laser beam 16 is pulled in the target recording layer out of the recording layer 21 by driving the objective lens actuator based on a focus error signal generated by the RF amplifier IC based on a voltage signal sent from the blue-violet photodetector IC. After focus pull-in of all beams is completed, the servo controller 360 pulls the red laser beam 15 in the track formed by a guide groove or the like on the guide layer 20 of the optical disc 10. At this time, the servo controller 360 pulls the focus in the track on the guide layer by driving the objective lens actuator based on a tracking error signal generated by the RF amplifier IC based on a voltage signal sent from the red photodetector IC. The tracking error signal is generated by, for example, a known differential push-pull method. Then, the signal processing unit 320 reads a data signal generated by the RF amplifier IC based on a voltage signal sent from the red photodetector IC and reproduces the current address. If the target address is different from the current one, the signal processing unit 320 sends a track jump control signal for tracks corresponding to the difference between the current address and the target address to the servo controller 360. The servo controller 360 transmits a driving pulse to the objective lens actuator based on the track jump control signal and moves the red laser beam 15 to the desired track. At this time, the blue-violet laser beam 16 that irradiates the optical disc through the same objective lens also moves on the tracks.

Confirming that the target address has been reached, the signal processing unit 320 transmits a recording data sequence to the laser driver 1. The laser driver 1 generates a driving pulse corresponding to the received recording data sequence, sends the driving pulse to the blue-violet laser, and pulse-drives the blue-violet laser. Pulses emitted by the blue-violet laser irradiate the recording layer 21 of the optical disc 10 through the objective lens to form recording marks corresponding to the recording data sequence.

In this way, the information recording/reproduction apparatus according to the embodiment records the recording target data in the target recording layer 21 of the optical disc 10.

The operation of the information recording/reproduction apparatus according to the embodiment at the time of information reproduction will be described next with reference to FIG. 2.

A host (not shown) sends a user data reproduction command to the signal processing unit 320 via the interface 310. The signal processing unit 320 starts a data reproduction process in accordance with the received reproduction command. First, the signal processing unit 320 transmits driving signals to the laser drivers 1 and 2 so as to turn on the blue-violet laser and the red laser at the reproduction power. The signal processing unit 320 transmits a focus search control signal to the servo controller 360. The servo controller 360 simple-harmonic-oscillates the collimator lens actuator in the focus direction in accordance with the transmitted control signal. The focus of the red laser beam 15 that has passed through the simple-harmonic-oscillated collimator lens and exited from the objective lens repetitively reciprocally moves in the vertical direction across the guide layer 20 of the optical disc 10. The reflected light of the red laser beam 15 from the guide layer 20 is condensed on the red photodetector IC. The red photodetector IC converts a current based on the reflected light amount into a voltage and sends it to the RF amplifier IC 350. The RF amplifier IC 350 generates a focus error signal of the red laser beam from the received voltage signal by predetermined calculation and sends the signal to the servo controller 360. In a region where the focus error signal becomes almost zero, the servo controller 360 switches the driving of the collimator lens actuator from the simple harmonic oscillation to driving based on the focus error signal and pulls the focus of the red laser beam in the guide layer. The servo controller 360 subsequently pulls the focus of the blue-violet laser beam 16 in the target recording layer 21 on the optical disc 10. At this time, the focus of the blue-violet laser beam 16 is pulled in the target recording layer out of the recording layer 21 by driving the objective lens actuator based on a focus error signal generated by the RF amplifier IC based on a voltage signal sent from the blue-violet photodetector IC. After focus pull-in of all beams is completed, the servo controller 360 pulls the red laser beam 15 in the track of the guide layer 20. At this time, the servo controller 360 pulls the focus in the track on the guide layer 20 by driving the objective lens actuator based on a tracking error signal generated by the RF amplifier IC based on a voltage signal sent from the red photodetector IC. Then, the signal processing unit 320 reads a data signal generated by the RF amplifier IC based on a voltage signal sent from the red photodetector IC and reproduces the current address. If the target address is different from the current one, the signal processing unit 320 sends a track jump control signal for tracks corresponding to the difference between the current address and the target address to the servo controller 360. The servo controller 360 transmits a driving pulse to the objective lens actuator based on the track jump control signal and moves the red laser beam 15 to the desired track. At this time, the blue-violet laser beam 16 that irradiates the optical disc through the same objective lens also moves on the tracks.

The blue-violet photodetector IC converts a current based on the amount of light of the blue-violet laser beam 16 reflected by the recording layer 21 of the optical disc 10 into a voltage and sends it to the RF amplifier IC 350. The RF amplifier IC 350 generates a tracking error signal of the blue-violet laser beam 16 from the received voltage signal by predetermined calculation and sends the signal to the servo controller 360. In this case, the tracking error signal is, for example, a differential phase detection (DPD) signal or push-pull signal generated from a recorded mark string on the recording layer 21.

After determining that a track near the target address has been reached, the signal processing unit 320 transmits a disconnection control signal from the guide layer servo to the servo controller 360. The servo controller 360 switches the driving of the objective lens actuator from the driving based on the tracking error signal of the red laser beam 15 to driving based on the tracking error signal of the blue-violet laser beam 16 and pulls the blue-violet laser beam 16 in the recorded track of the recording layer 21. The signal processing unit 320 reads a data signal generated by the RF amplifier IC based on a voltage signal sent from the blue-violet photodetector IC and reproduces the current address on the recording layer 21 in which the blue-violet laser beam 16 is pulled. If the target address is different from the current one, the signal processing unit 320 sends a track jump control signal for tracks corresponding to the difference between the current address and the target address to the servo controller 360. The servo controller 360 transmits a driving pulse to the objective lens actuator based on the track jump control signal and moves the blue-violet laser beam 16 to the desired track.

Confirming that the target address has been reached, the signal processing unit 320 starts data reproduction from the recording layer 21. In this way, the information recording/reproduction apparatus according to the embodiment can reproduce information from the recording layer.

As described above, the red laser beam 15 that reproduces information from the guide layer 20 and the blue-violet laser beam 16 that records information in the recording layer 21 or reproduces information from the recording layer 21 play the necessary roles, thereby implementing recording/reproduction of the optical disc 10, as can be seen.

A problematic phenomenon in an optical disc having a plurality of recording layers is interlayer crosstalk. There are interlayer crosstalk caused by reflection of an adjacent recording layer and confocal crosstalk (see related art). The interlayer crosstalk caused by reflection of an adjacent recording layer can be avoided by setting the thickness of the intermediate layer 31 to 10 µm or more, as in the related art. The thickness design value of the intermediate layer 31 is set by adding a manufacturing error to the minimum value (10 µm) of the thickness of the intermediate layer 31.

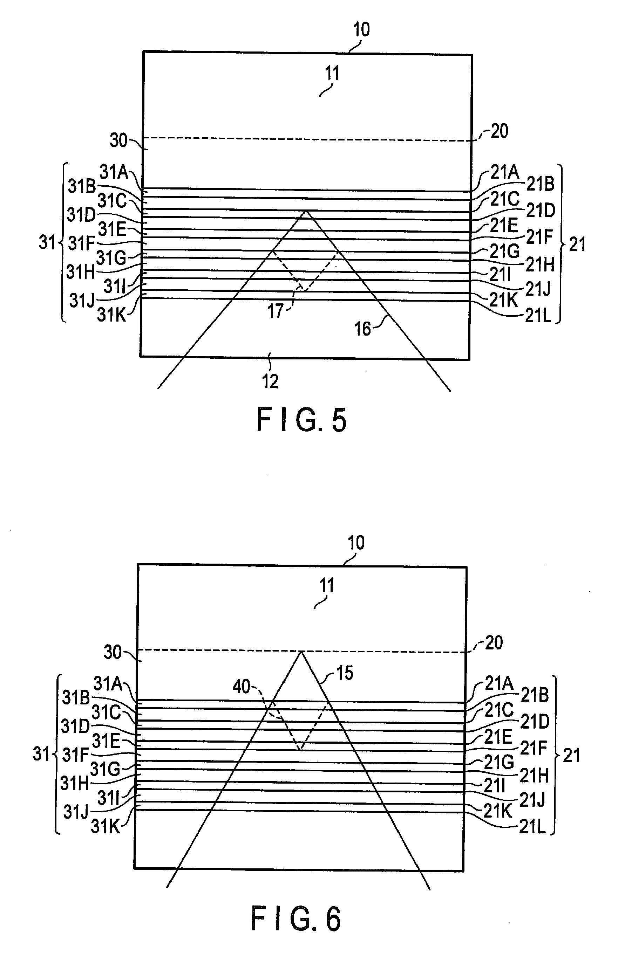

On the other hand, the manner the confocal crosstalk of the recording/reproduction light (blue-violet laser beam 16) occurs will be described with reference to FIG. 5. The blue-violet laser beam 16 for recording/reproduction, which irradiates the target recording layer (recording layer 21C in FIG. 5) out of the recording layer 21 of the optical disc 10, branches to a plurality of light beams due to the translucency of the recording layer. For example, the laser beam 16 is partially reflected by the recording layer 21G and focuses on the recording layer 21K as a branched beam 17. This reflected light is reflected by the recording layer 21G again and joins the laser beam 16, that is, the recording/reproduction light in the recording layer 21C. This light is detected by the blue-violet photodetector IC simultaneously at almost the same spatial position as the blue-violet laser beam. The confocal crosstalk light has the same wavelength as that of the recording/reproduction light and is detected through almost the same optical path. For this reason, the spatial and band separation means cannot effectively act, and the confocal crosstalk is detected as strong noise. Forming the intermediate layers 31 in the recording layer 21 to different thicknesses is known to be effective for reducing confocal crosstalk of recording/reproduction light (blue-violet laser beam) in the recording layer. For example, the intermediate layers 31 preferably have a structure that repetitively alternates a first intermediate layer thickness and a second intermediate layer thickness. At this time, the confocal crosstalk is reduced when the first intermediate layer thickness and the second intermediate layer thickness have a difference of 4 µm or more in consideration of the manufacturing margin. Hence, when the first intermediate layer thickness is set to 12 µm, and the second intermediate layer thickness is set to 16 µm, the confocal crosstalk is reduced, and the interlayer crosstalk caused by reflection can also be reduced. In addition, the confocal crosstalk can further be reduced by setting a reflectance of 2% or less for all layers of the recording layer 21.

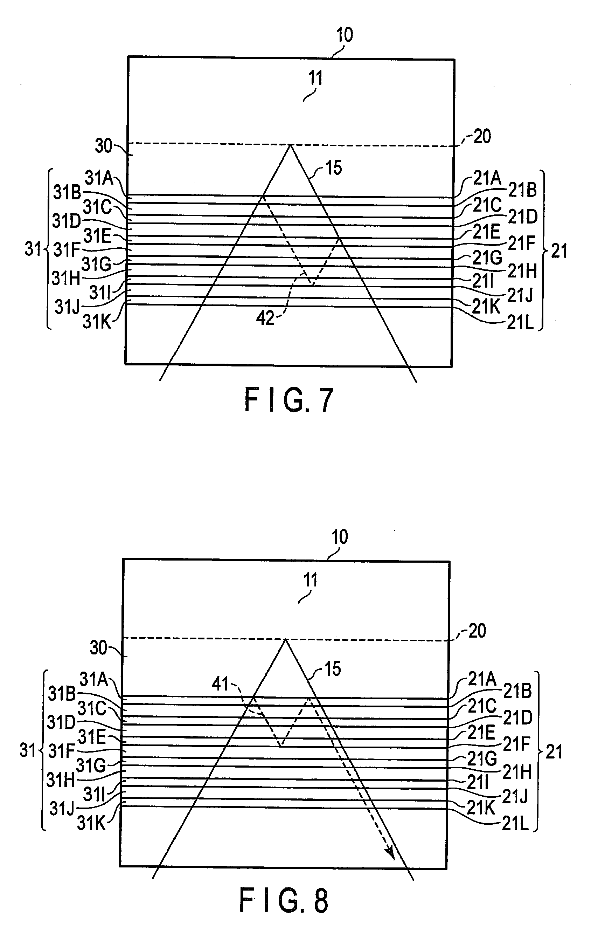

As described above, to record information in the recording layer 21 or reproduce information from the recording layer 21, it is especially important that not only the recording/reproduction light (blue-violet laser beam 16) contributing to direct recording/reproduction of the recording layer 21 but also the red laser beam 15 that reproduces information from the guide layer 20 plays the necessary role. Hence, measures against the interlayer crosstalk of the guide light (red laser beam 15) are important, like the interlayer crosstalk of the recording/reproduction light. FIG. 6 shows a manner the confocal crosstalk of the guide light (red laser beam 15) occurs. The red laser beam 15 for guide, which irradiates the guide layer 20 of the optical disc 10, branches to a plurality of light beams due to the translucency of the recording layer. For example, the laser beam 15 is partially reflected by the recording layer 21A and focuses on the recording layer 21F as a branched beam 40. This reflected light is reflected by the recording layer 21A again and joins the laser beam 15, that is, the recording/reproduction light in the guide layer 20. This light is detected by the red photodetector IC simultaneously at almost the same spatial position as the red laser beam 15. The confocal crosstalk light has the same wavelength as that of the guide light and is detected through almost the same optical path. For this reason, the spatial and band separation means cannot effectively act, and the confocal crosstalk is detected as strong noise. On the other hand, FIG. 7 shows another manner the confocal crosstalk of the guide light (red laser beam 15) occurs. The red laser beam 15 for guide, which irradiates the guide layer 20 of the optical disc 10, branches to a plurality of light beams due to the translucency of the recording layer. For example, the laser beam 15 is partially reflected by the recording layer 21A and reflected by the recording layer 21J as a branched beam 42. This reflected light is reflected by the recording layer 21E and joins the laser beam 15, that is, the recording/reproduction light in the guide layer 20. This crosstalk light does not focus on the recording layer 21J, unlike the crosstalk light described with reference to FIG. 6, but is detected by the red photodetector IC simultaneously at almost the same spatial position as the red laser beam 15 at its peripheral portion. Hence, in this embodiment, this light is also considered as a kind of confocal crosstalk.

In general, the reflectance of the recording layer 21 is adjusted complying with the blue-violet wavelength band of the recording/reproduction light. Hence, the reflectance in the red wavelength band of the guide light cannot preferentially be adjusted. Conversely, if the reflectance in the red wavelength band is preferentially adjusted not to cause confocal crosstalk, the choices of materials and the film thickness adjustment range of the recording layer are extremely restricted. This leads to an extremely poor productivity of the optical disc 10 and an increase in cost. Hence, to reduce the confocal crosstalk of the guide light, an approach independent of that for the confocal crosstalk (FIG. 5) of the recording/reproduction light in the recording layer is preferably employed. In this embodiment, the thickness of the intermediate layer 30 between the guide layer 20 and the recording layer 21A and that of the intermediate layer 31 in the recording layer 21 are appropriately set, thereby reducing the confocal crosstalk of the guide light.

FIG. 8 is a view showing an example in which the confocal crosstalk of the guide light is reduced. The red laser beam 15 for guide, which irradiates the guide layer 20 of the optical disc 10, is partially reflected by the recording layer 21A and reflected by the recording layer 21F as a branched beam 41. In this case, however, since the intermediate layer 30 and the intermediate layer 31 are appropriately formed, the branched beam 41 does not focus on the recording layer 21F. In addition, even when reflected by the recording layer 21A again, the reflected light does not join the laser beam 15, that is, the recording/reproduction light in the guide layer 20 in the same optical path and is detected by the red photodetector IC at a position that does not spatially match. For this reason, the crosstalk light can spatially be separated from the guide light 15, and the noise can be reduced.

An intermediate layer thickness structure capable of reducing the confocal crosstalk of the guide light will be described here. Deriving the intermediate layer thickness structure capable of reducing the confocal crosstalk of the guide light and revealing intermediate layer thickness conditions under which the confocal crosstalk occurs are two sides of the same coin. The occurrence conditions of the confocal crosstalk of the guide light will be explained below.

### [First Condition]

"The thickness of the intermediate layer between the guide layer and the recording layer closest to the guide layer matches the sum of the thicknesses of arbitrary continuous intermediate layers in the recording layer group".

The sum of the thicknesses of arbitrary continuous intermediate layers includes the sum of the thicknesses of one or more recording layers included between the arbitrary continuous intermediate layers. However, since the recording layer is much thinner than the intermediate layer or the like, the first condition may be defined while excluding the sum of the thicknesses of one or more recording layers included between the arbitrary continuous intermediate layers.

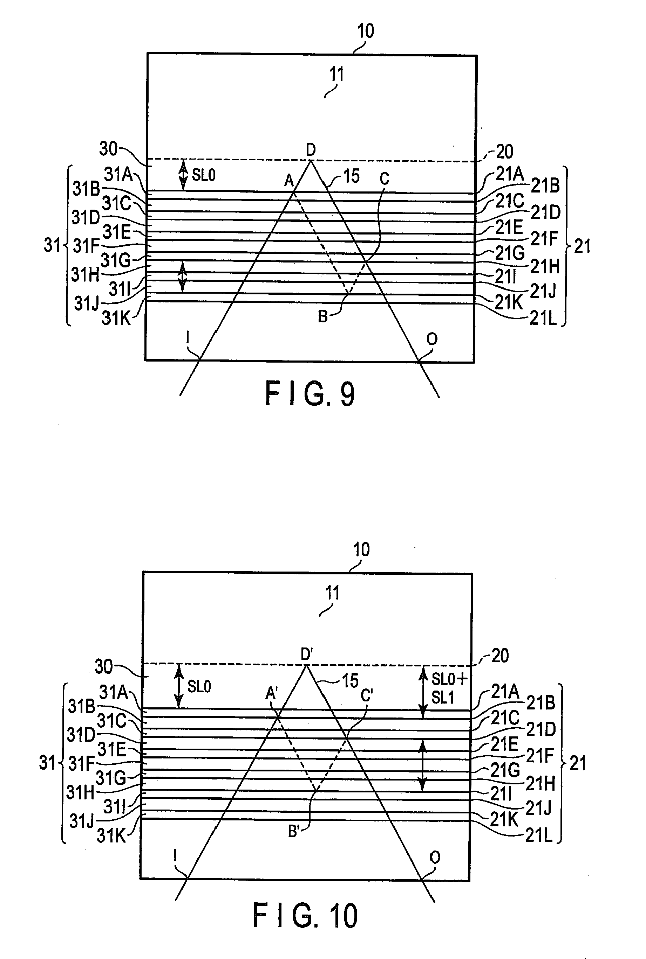

FIG. 9 illustrates the manner the confocal crosstalk of the guide light occurs when this condition is satisfied. In FIG. 9, the thickness (SL0) of the intermediate layer 30 between the guide layer and the recording layer closest to the guide layer matches the sum of the thicknesses of the intermediate layers 31H to 31J between the recording layer 21H and the recording layer 21K. Hence, line segments AD and BC in FIG. 9 have the same length. At this time, a quadrilateral ABCD in FIG. 9 is a parallelogram. The branched beam passing through an optical path IABCO joins the guide light (optical path IADCO) and becomes confocal crosstalk light. Note that if the thickness of the intermediate layer 30 matches the sum of the thicknesses of arbitrary continuous intermediate layers including the intermediate layer 31A, the branched beam becomes confocal crosstalk light of a type that focuses on the recording layer.

### [Second Condition]

"The sum of the thicknesses of the intermediate layer between the guide layer and the recording layer closest to the guide layer and the intermediate layer between the recording layer closest to the guide layer and an arbitrary recording layer matches the sum of the thicknesses of arbitrary continuous intermediate layers in the recording layer group".

When one or more recording layers are included between the recording layer closest to the guide layer and an arbitrary recording layer, the thickness of the intermediate layer between the recording layer closest to the guide layer and the arbitrary recording layer includes the sum of the thicknesses of the one or more recording layers. However, since the recording layer is much thinner than the intermediate layer or the like, the second condition may be defined while excluding the sum of the thicknesses of one or more recording layers included between the recording layer closest to the guide layer and the arbitrary recording layer.

FIG. 10 illustrates the manner the confocal crosstalk of the guide light occurs when this condition is satisfied. In FIG. 10, the sum (SL0 + SL1) of the thickness (SL0) of the intermediate layer 30 between the guide layer and the recording layer 21A closest to the guide layer and the thickness (SL1) of the intermediate layer 31A between the recording layer 21A and the recording layer 21B matches the sum of the thicknesses of the intermediate layers 31D to 31H between the recording layer 21D and the recording layer 21I. Hence, line segments A'D' and B'C' in FIG. 10 have the same length. At this time, a quadrilateral A'B'C'D' in FIG. 10 is a parallelogram. The branched beam passing through an optical path IA'B'C'O joins the guide light (optical path IA'D'C'O) and becomes confocal crosstalk light. Note that if the sum of the thicknesses of the intermediate layer 30 and the intermediate layer 31A matches the sum of the thicknesses of arbitrary continuous intermediate layers including the intermediate layer 31B, the branched beam becomes confocal crosstalk light of a type that focuses on the recording layer. Similarly, if the sum of the thicknesses of the intermediate layer 30 and the intermediate layers 31A and 31B matches the sum of the thicknesses of arbitrary continuous intermediate layers including the intermediate layer 31C, the branched beam becomes confocal crosstalk light of a type that focuses on the recording layer.

Hence, the intermediate layer thickness structure capable of reducing the confocal crosstalk of the guide light is an intermediate layer thickness structure that simultaneously satisfies the first condition and the second condition or does not satisfy one of the conditions.

As described above, to reduce the interlayer crosstalk of the recording/reproduction light (blue-violet laser beam 16), the intermediate layers 31 in the recording layer 21 preferably have a structure that repetitively alternates a first intermediate layer thickness and a second intermediate layer thickness. The optical disc 10 enables reliable information recording/reproduction only when it has a structure capable of simultaneously reducing the interlayer crosstalk of the guide light (red laser beam 15) and the interlayer crosstalk of the recording/reproduction light (blue-violet laser beam 16). Hence, the intermediate layer thickness structure capable of reducing the confocal crosstalk of the guide light is preferably considered to be applied to the structure that repetitively alternates the first and second intermediate layer thicknesses. Conditions of the intermediate layer thickness structure capable of reducing the confocal crosstalk of the guide light while reducing the interlayer crosstalk of the recording/reproduction light will be examined below. Note that the recording layer 21 is assumed to have 12 layers. When the structure that repetitively alternates the first and second intermediate layer thicknesses is generalized, the first intermediate layer thickness can be represented by m [µm], and the second intermediate layer thickness by m + a [µm]. The first intermediate layer thickness is assumed to be smaller than the second intermediate layer thickness. Note that the intermediate layer between the recording layer closest to the guide layer and the next closest recording layer is assumed to have the first intermediate layer thickness.

At this time, the thickness of the intermediate layer 30 that satisfies the above-described first condition is as follows. Cases in which the thickness of the intermediate layer 30 is less than or equal to the second intermediate layer thickness are excluded because interlayer crosstalk caused by reflection of the recording layer adjacent to the guide layer becomes large.
2m+a
3m+a
3m+2a
4m+2a
5m+2a
5m+3a
6m+3a
7m+3a
7m+4a
8m+4a
9m+4a
9m+5a
10m+5a
11m+5a
11m+6a

On the other hand, the thickness of the intermediate layer 30 that satisfies the above-described second condition is as follows.
2m+2a
4m+3a
6m+4a
8m+5a
10m+6a

Cases in which the thickness matches the thickness of the intermediate layer 30 that satisfies the first condition are excluded. Hence, the thickness of the intermediate layer 30 that satisfies any one of the first condition and the second condition is as follows (intermediate layer thickness condition group 1).
2m+a
2m+2a
3m+a
3m+2a
4m+2a
4m+3a
5m+2a
5m+3a
6m+3a
6m+4a
7m+3a
7m+4a
8m+4a
8m+5a
9m+4a
9m+5a
10m+5a
10m+6a
11m+5a
11m+6a

When forming the intermediate layers 31 in the recording layer 21, the difference between the first intermediate layer thickness and the second intermediate layer thickness, that is, a [µm] is preferably as large as possible from the viewpoint of interlayer crosstalk reduction. However, if the difference is too large, the whole recording layer 21 becomes thick, and large aberration occurs as the characteristic of the objective lens of the optical pickup head unit 200. Hence, a needs to be smaller than m. That is, m > a. The thickness of the intermediate layer 30 preferably satisfies neither the first condition nor the second condition from the viewpoint of confocal crosstalk avoidance. At this time, the thickness of the intermediate layer 30 is preferably set to a value distant from any value of the above-described intermediate layer thickness condition group 1. As one method for this is, for example, making the thickness of the intermediate layer 30 much larger than 11m + 6a. In this case, surely, the confocal crosstalk of the guide light does not occur. However, the total thickness of the intermediate layer 30, the intermediate layers 31, and the cover layer is too large, and large aberration occurs as the characteristic of the objective lens of the optical pickup head unit 200.

Hence, the thickness of the intermediate layer 30 can be set to, for example, an intermediate value between 2m + a, 3m + a, 3m + 2a, 4m + 2a, 5m + 2a, 5m + 3a, 6m + 3a, 7m + 3a, 7m + 4a, 8m + 4a, 9m + 4a, 9m + 5a, 10m + 5a, 11m + 5a, 11m + 6a of the first condition or a value close to an intermediate value. For example, the intermediate value between 2m + a and 3m + a is 2.5m + a. Since not only the first condition but also the second condition is preferably taken into consideration, the thickness of the intermediate layer 30 is preferably set to an intermediate value in the above-described intermediate layer thickness condition group 1 or a value close to an intermediate value. The interval of continuous values in the intermediate layer thickness condition group 1 is m, a, or m - a. In consideration of m > a, the values are most distant when the interval is m. That is, values 3m + 2a and 4m + 2a, 5m + 3a and 6m + 3a, 7m + 4a and 8m + 4a, and 9m + 5a and 10m + 5a have this interval. Considering the largest interval, when the thickness of the intermediate layer 30 is set to an intermediate value between these values, that is, 3.5m + 2a, 5.5m + 3a, 7.5m + 4a, or 9.5m + 5a, the interlayer crosstalk of the recording/reproduction light can be reduced while reducing the confocal crosstalk of the guide light.

As described above, as for the value of the intermediate layer 31, for example, m = 12 and a = 4, that is, the first intermediate layer thickness of 12 µm and the second intermediate layer thickness of 16 µm can effectively be set from the viewpoint of reducing the interlayer crosstalk of the recording/reproduction light. On the other hand, m is preferably large from the viewpoint of the confocal crosstalk light of the guide light. An example of the value that simultaneously satisfies both conditions and prevents the total thickness of the intermediate layer and the cover layer from becoming too large has been obtained.

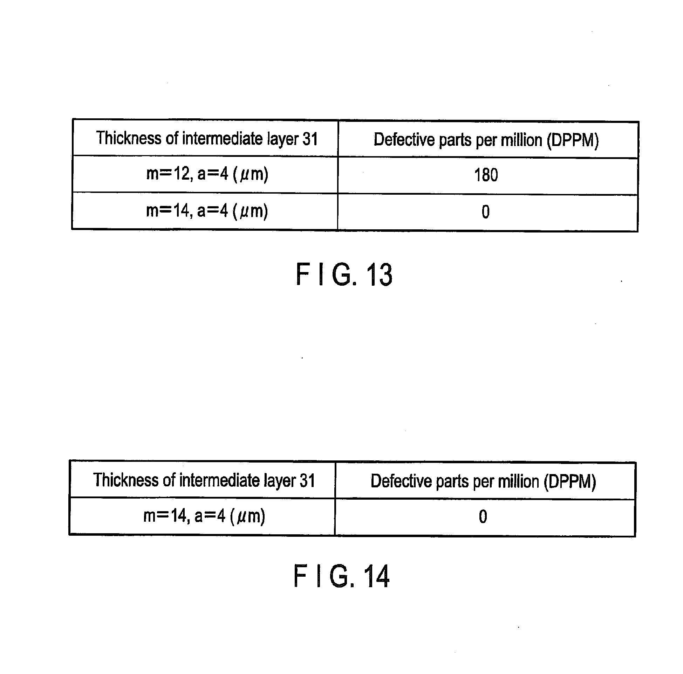

FIG. 13 shows the probability of occurrence of the confocal crosstalk of the guide light obtained by Monte Carlo simulations while setting the numerical aperture of the objective lens for the red laser beam to 0.65 and the thickness of the intermediate layer 30 to 3.5m + 2a. This reveals that when m = 14 [µm], the probability of occurrence (DPPM) of a disc in which the confocal crosstalk of guide light occurs decreases from 180 to 0, as compared to m = 12 [µm] (FIG. 13).

Hence, the optical disc 10 in which, for example, m = 14 and a = 4, that is, the first intermediate layer thickness is 14 µm, and the second intermediate layer thickness is 18 µm, and the intermediate layer 30 is formed to a thickness of 57, 89, 121, or 153 µm is a reliable optical disc that reduces the interlayer crosstalk of the guide light (red laser beam 15) and the recording/reproduction light (blue-violet laser beam 16) and also attains a low fraction defective at the time of disc manufacturing. Note that the intermediate layer 30 preferably has a thickness of 57 or 89 µm in particular because it is preferably as thin as possible from the viewpoint of aberration of the objective lens of the optical pickup head unit 200.

In the structure that repetitively alternates the first and second intermediate layer thicknesses, the first intermediate layer thickness may be larger than the second intermediate layer thickness. In this case, the first intermediate layer thickness can be represented by m + a [µm], and the second intermediate layer thickness by m [µm]. At this time, the thickness of the intermediate layer 30 that satisfies the above-described first condition is as follows. Cases in which the thickness of the intermediate layer 30 is less than or equal to the second intermediate layer thickness are excluded.
2m+a
3m+a
3m+2a
4m+2a
5m+2a
5m+3a
6m+3a
7m+3a
7m+4a
8m+4a
9m+4a
9m+5a
10m+5a
11m+5a
11m+6a

On the other hand, the thickness of the intermediate layer 30 that satisfies the above-described second condition is as follows.
2m
4m+a
6m+2a
8m+3a
10m+4a

Cases in which the thickness matches the thickness of the intermediate layer 30 that satisfies the first condition are excluded. Hence, the thickness of the intermediate layer 30 that satisfies any one of the first condition and the second condition is as follows (intermediate layer thickness condition group 2).
2m
2m+a
3m+a
3m+2a
4m+a
4m+2a
5m+2a
5m+3a
6m+2a
6m+3a
7m+3a
7m+4a
8m+3a
8m+4a
9m+4a
9m+5a
10m+4a
10m+5a
11m+5a
11m+6a

The difference between the first intermediate layer thickness and the second intermediate layer thickness, a [µm] satisfies the relationship m > a, as described above.

Hence, the thickness of the intermediate layer 30 can be set to, for example, an intermediate value between 2m + a, 3m + a, 3m + 2a, 4m + 2a, 5m + 2a, 5m + 3a, 6m + 3a, 7m + 3a, 7m + 4a, 8m + 4a, 9m + 4a, 9m + 5a, 10m + 5a, 11m + 5a, 11m + 6a of the first condition or a value close to an intermediate value. For example, the intermediate value between 2m + a and 3m + a is 2.5m + a. Since not only the first condition but also the second condition is preferably taken into consideration, the thickness of the intermediate layer 30 is preferably set to an intermediate value in the above-described intermediate layer thickness condition group 2 or a value close to an intermediate value. The interval of continuous values in the intermediate layer thickness condition group 2 is m, a, or m - a. In consideration of m > a, the values are most distant when the interval is m. That is, values 2m + a and 3m + a, 4m + 2a and 5m + 2a, 6m + 3a and 7m + 3a, and 8m + 4a and 9m + 4a have this interval. Considering the largest interval, when the thickness of the intermediate layer 30 is set to an intermediate value between these values, that is, 2.5m + a, 4.5m + 2a, 6.5m + 3a, or 8.5m + 4a, the interlayer crosstalk of the recording/reproduction light can be reduced while reducing the confocal crosstalk of the guide light.

FIG. 14 shows the probability of occurrence of the confocal crosstalk of the guide light obtained by Monte Carlo simulations while setting the numerical aperture of the objective lens for the red laser beam to 0.65 and the thickness of the intermediate layer 30 to 2.5m + a. It was confirmed that when the thickness of the intermediate layer 30 was set based on the above-described condition, the probability of occurrence (DPPM) of a disc in which the confocal crosstalk of guide light occurs became zero (FIG. 14).

Hence, the optical disc 10 in which, for example, m = 14 and a = 4, that is, the first intermediate layer thickness is 18 µm, and the second intermediate layer thickness is 14 µm, and the intermediate layer 30 is formed to a thickness of 39, 71, 103, 135, or 167 µm is a reliable optical disc that reduces the interlayer crosstalk of the guide light (red laser beam 15) and the recording/reproduction light (blue-violet laser beam 16) and also attains a low fraction defective at the time of disc manufacturing. Note that the intermediate layer 30 preferably has a thickness of 39 or 71 µm in particular because it is preferably as thin as possible from the viewpoint of aberration of the objective lens of the optical pickup head unit 200.

### [Structure of Optical Disc]

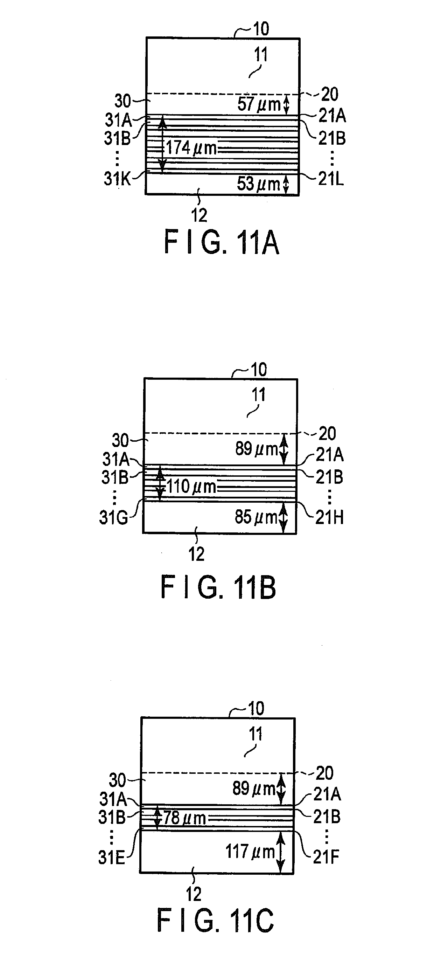

An optical disc structure in which the intermediate layer thicknesses in the guide layer and the recording layer are configured as described above will be described with reference to FIGS. 11A, 11B, and 11C. FIGS. 11A, 11B, and 11C illustrate disc structures in which the first intermediate layer is thinner than the second intermediate layer. As described in the above embodiment, when the first intermediate layer thickness is 14 µm, and the second intermediate layer thickness is 18 µm, a reliable optical disc can be obtained by setting the thickness of the intermediate layer 30 to 57 µm or 89 µm. FIG. 11A shows an example of the structure of the optical disc 10 including 12 recording layers 21. If the cover layer 12 is too thick, the tilt margin at the time of recording/reproduction of the recording layer lowers. However, if the cover layer 12 is too thin, the recording layer 21L closest to the cover layer cannot sufficiently be protected. Hence, the thickness of the cover layer 12 is set to 53 µm that is actually effective in a blu-ray disc and the like. As a result, the distance of the guide layer 20 from the cover layer surface is 284 µm, and the distance of the recording layer 21A from the cover layer surface is 227 µm. FIGS. 11B and 11C show examples of the structure of the optical disc 10 including eight recording layers 21 and six recording layers 21, respectively. The guide layer 20 is located 284 µm from the cover layer surface, as in the example of 12 layers. This is because the guide light quality and aberration characteristic are expected to be almost the same when the same optical pickup head unit 200 performs recording/reproduction of the discs. When the thickness of the intermediate layer 30 is set to 57 or 89 µm, a reliable optical disc can be obtained. The thickness of the intermediate layer 30 is set to 89 µm here to prevent the cover layer 12 from becoming extremely thick. As a result, the distance of the recording layer 21A from the cover layer surface is 195 µm. Consequently, the thickness of the cover layer 12 of the disc including eight recording layers is 85 µm (FIG. 11B), and the thickness of the cover layer 12 of the disc including six recording layers is 117 µm (FIG. 11C).

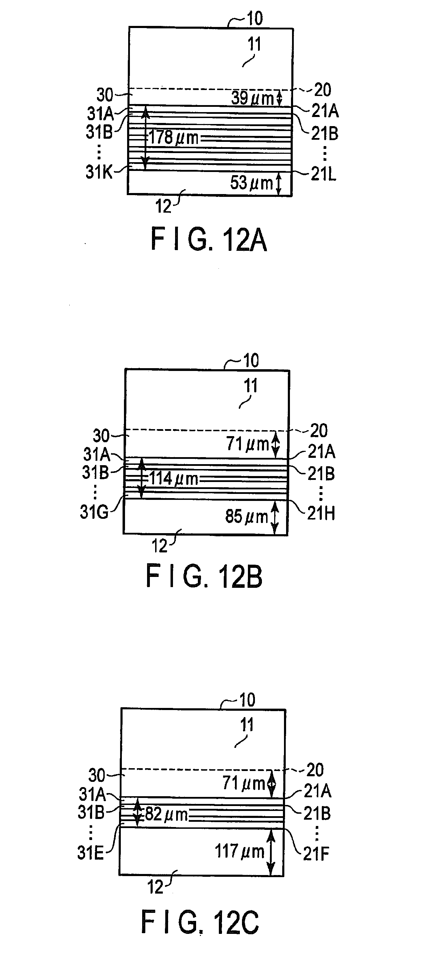

On the other hand, FIGS. 12A, 12B, and 12C illustrate examples of the disc structure in which the first intermediate layer is thicker than the second intermediate layer. In this case, as described in the above embodiment, when the first intermediate layer thickness is 18 µm, and the second intermediate layer thickness is 14 µm, a reliable optical disc can be obtained by setting the thickness of the intermediate layer 30 to 39 µm or 71 µm. FIG. 12A shows an example of the structure of the optical disc 10 including 12 recording layers 21. The thickness of the cover layer 12 is set to 53 µm due to the same reason as described above. As a result, the distance of the guide layer 20 from the cover layer surface is 270 µm, and the distance of the recording layer 21A from the cover layer surface is 231 µm. FIGS. 12B and 12C show examples of the structure of the optical disc 10 including eight recording layers 21 and six recording layers 21, respectively. The guide layer 20 is located 270 µm from the cover layer surface, as in the example of 12 layers, due to the same reason as in the examples shown in FIGS. 11A, 11B, and 11C. When the thickness of the intermediate layer 30 is set to 39 or 71 µm, a reliable optical disc can be obtained. The thickness of the intermediate layer 30 is set to 71 µm here to prevent the cover layer 12 from becoming extremely thick. As a result, the distance of the recording layer 21A from the cover layer surface is 199 µm. Consequently, the thickness of the cover layer 12 of the disc including eight recording layers is 85 µm (FIG. 12B), and the thickness of the cover layer 12 of the disc including six recording layers is 117 µm (FIG. 12C).

In the optical storage medium according to this embodiment, the intermediate layer thickness structures in the guide layer and the recording layer are suitably configured in a multilayered optical disc separately including a dedicated servo layer (guide layer) and an information recording/reproduction layer. This allows to reduce the interlayer crosstalk of not only recording/reproduction light used for recording/reproduction of the recording layer but also guide light used for reproduction of the guide layer. It is therefore possible to provide a multilayered optical disc having high reliability in information recording/reproduction.

The embodiment will be summarized below.
(1) In the optical storage medium according to the embodiment, the thickness of the intermediate layer between the guide layer and the recording layer closest to the guide layer does not match the sum of the thicknesses of arbitrary continuous intermediate layers in the recording layer group.
(2) On the assumption of (1), the sum of the thicknesses of the intermediate layer between the guide layer and the recording layer closest to the guide layer and the intermediate layer (group) between the recording layer closest to the guide layer and an arbitrary recording layer does not match the sum of the thicknesses of arbitrary continuous intermediate layers in the recording layer group.
(3) On the assumption of (1) or (2), as the intermediate layers in the recording layer group, a first intermediate layer having a first film thickness and a second intermediate layer having a second film thickness are alternately stacked while sandwiching the recording layers.
(4) On the assumption of (3), letting m be the first film thickness, and m + a be the second film thickness, the thickness of the intermediate layer between the guide layer and the recording layer closest to the guide layer is 3.5m + 2a, 5.5m + 3a, 7.5m + 4a, or 9.5m + 5a.
(5) On the assumption of (3), letting m + a be the first film thickness, and m be the second film thickness, the thickness of the intermediate layer between the guide layer and the recording layer closest to the guide layer is 2.5m + a, 4.5m + 2a, 6.5m + 3a, 8.5m + 4a, or 10.5m + 5a.
(6) On the assumption of (3), the first film thickness is 14 µm, the second film thickness is 18 µm, and the thickness of the intermediate layer between the guide layer and the recording layer closest to the guide layer is 57 or 89 µm.
(7) On the assumption of (3), the first film thickness is 18 µm, the second film thickness is 14 µm, and the thickness of the intermediate layer between the guide layer and the recording layer closest to the guide layer is 39 or 71 µm.

According to the at least one embodiment, it is possible to provide an optical storage medium capable of reducing interlayer crosstalk by a laser beam directed to the servo layer (guide layer). In addition, according to the at least one embodiment, it is possible to provide an information recording apparatus and information recording method for recording information on the optical storage medium.

## Claims

1. An optical storage medium **characterized by** comprising:
a guide layer (20);
a recording layer group (21) comprising a plurality of recording layers and a plurality of intermediate layers, wherein each of the plurality of recording layers is alternately arranged with each of the plurality of recording layers; and
a guide layer-side intermediate layer (30) between the guide layer and a first recording layer of the plurality of recording layers, wherein the first recording layer is closest to the guide layer,
wherein a thickness T1 of the guide layer-side intermediate layer does not equal a sum S1 of thicknesses of any number of continuously adjacent intermediate layers comprised in the recording layer group.

2. The medium of claim 1, **characterized in that** the sum S1 comprises a sum of thicknesses of one or a plurality of recording layers comprised between the continuously adjacent intermediate layers.

3. The medium of claim 1 or 2, **characterized in that** a sum S2 of the thickness T1 of the guide layer-side intermediate layer and a thickness T2 of one of a plurality of intermediate layers between the first recording layer and a second recording layer comprised in the recording layer group does not equal the sum S1.

4. The medium of claim 3, **characterized in that** if a plurality of intermediate layers are comprised between the first recording layer and the second recording layer, the sum S2 comprises a sum of thicknesses of one or a plurality of recording layers comprised between the plurality of intermediate layers.

5. The medium of any one of claims 1, to 4 **characterized in that** a plurality of values at which the thickness T1 of the guide layer-side intermediate layer equals the sum S1 are assumed, an intermediate value between a first value to of the plurality of values and a second value that is large next to the first value is defined, and
the thickness T1 of the guide layer-side intermediate layer equals the intermediate value.

6. The medium of any one of claims 1 to 4, **characterized in that** a plurality of values at which the thickness T1 of the guide layer-side intermediate layer equals the sum S1 and a plurality of values at which the sum S2 equals the sum S1 are assumed, an intermediate value between a first value of all the values and a second value that is large next to the first value is defined, and
the thickness T1 of the guide layer-side intermediate layer equals the intermediate value.

7. The medium of any one of claims 1 to 6, **characterized in that** the recording layer group comprises a first intermediate layer comprising a first film thickness and a second intermediate layer comprising a second film thickness different from the first film thickness, which are alternately arranged while sandwiching one recording layer.

8. The medium of claim 7, **characterized in that** the intermediate layer between the recording layer closest to the guide layer and a next closest recording layer is set as the first intermediate layer, the first film thickness m and the second film thickness m + a are defined, and the thickness T1 of the guide layer-side intermediate layer is one of 3.5m + 2a, 5.5m + 3a, 7.5m + 4a, and 9.5m + 5a.

9. The medium of claim 7, **characterized in that** the intermediate layer between the recording layer closest to the guide layer and a next closest recording layer is set as the first intermediate layer, the first film thickness m + a and the second film thickness m are defined, and the thickness T1 of the guide layer-side intermediate layer is one of 2.5m + a, 4.5m + 2a, 6.5m + 3a, 8.5m + 4a, and 10.5m + 5a.

10. The medium of claim 7, **characterized in that** the intermediate layer between the recording layer closest to the guide layer and a next closest recording layer is set as the first intermediate layer, the first film thickness is 14 µm, the second film thickness is 18 µm, and the thickness T1 of the guide layer-side intermediate layer is one of 57 and 89 µm.

11. The medium of claim 7, **characterized in that** the intermediate layer between the recording layer closest to the guide layer and a next closest recording layer is set as the first intermediate layer, the first film thickness is 18 µm, the second film thickness is 14 µm, and the thickness T1 of the guide layer-side intermediate layer is one of 39 and 71 µm.

12. An information recording apparatus for recording information on an optical storage medium of any one of claims 1 to 11 by a laser beam, **characterized by** comprising:
a first irradiator configured to irradiate the guide layer with a first laser beam;
a detector configured to detect first reflected light corresponding to the first laser beam;
a reproducer configured to reproduce information recorded in the guide layer based on a detection result of the first reflected light; and
a second irradiator configured to irradiate a designated recording layer out of the plurality of recording layers with a second laser beam controlled in correspondence with the recorded information.

13. An information recording method of recording information on an optical storage medium of any one of claims 1 to 11 by a laser beam, **characterized by** comprising:
irradiating the guide layer with a first laser beam;
detecting first reflected light corresponding to the first laser beam;
reproducing information recorded in the guide layer based on a detection result of the first reflected light; and
irradiating a designated recording layer out of the plurality of recording layers with a second laser beam controlled in correspondence with the recorded information.
